# EUROPEAN PATENT APPLICATION

(11) **EP 3 432 445 A1**
(43) Date of publication of application: **23.01.2019**
(21) Application number: 17753395.7
(22) Date of filing: 02.02.2017
(51) Int. Cl.: H02J 50/80, H02J 7/02

(54) **WIRELESS CHARGING METHOD AND APPARATUS AND SYSTEM THEREFOR**

(30) Priority: 15.02.2016 KR 20160016939
(71) Applicant: LG Innotek Co., Ltd., Seoul 04637 (KR)
(72) Inventor: JO, Min Young, Seoul 04637 (KR); LEE, Jong Heon, Seoul 04637 (KR); CHAE, Yong Suk, Seoul 04637 (KR)
(74) Representative: DREISS Patentanwälte PartG mbB
(86) International application number: PCT/KR2017/001110
(87) International publication number: WO 2017/142234

(57) **Abstract**

The present invention relates to a wireless charging method and apparatus and system therefor. A wireless power transmission apparatus for wirelessly transmitting power to a wireless power receiving apparatus according to one embodiment of the present invention comprises: a power transmission unit for sending a power signal through a transmission coil; a power conversion unit for converting an intensity of the power applied from the outside and transferring the converted power to the power transmission unit; a communication unit for receiving a packet from the wireless power receiving apparatus; and a control unit for controlling power on the basis of a control error value received through the communication unit, wherein, when an unexpected packet is received in a power transmission stage, the control unit may control power by applying a predetermined offset to the control error value. Thus, the present invention has an advantage of being able to minimize the interruption of wireless charging.

## Description

### [Technical Field]

The present invention relates to wireless power transmission technology, and more particularly to a wireless power transmission device capable of adaptively controlling transmission power based on the characteristics and operation states of a wireless power reception device and a power control method thereof.

### [Background Art]

Recently, with the rapid development of information and communication technology, a ubiquitous society is arising based on information and communication technology.

In order for information and communication devices to be connected anytime and anywhere, sensors equipped with a computer chip having a communication function need to be installed in all facilities in society. Therefore, the problem of supplying power to these devices and sensors is a new challenge. In addition, as a variety of portable devices, such as music players, including Bluetooth headsets and iPods, as well as mobile phones, has been rapidly increasing, charging batteries has come to require greater time and effort on the part of users. As a way to solve this problem, a wireless power transmission technology has recently attracted attention.

Wireless power transmission (wireless energy transfer) technology is a technology for wirelessly transmitting electrical energy from a transmitter to a receiver using an electromagnetic induction principle. An electric motor or a transformer that uses such an electromagnetic induction principle was already in use in the 1800s, and thereafter, a method of transferring electrical energy by radiating electromagnetic waves, such as a laser, high-frequency waves, and microwaves, has also been attempted. Electric toothbrushes and some wireless shavers that are often used are also actually charged with the electromagnetic induction principle.

Wireless energy transfer schemes devised to date may be broadly classified into an electromagnetic induction scheme, an electromagnetic resonance scheme, and an RF transmission scheme using a short wavelength radio frequency.

The electromagnetic induction scheme is a technology that uses a phenomenon in which a magnetic flux, which is generated when two coils are disposed adjacent to each other and current is applied to one coil, causes the other coil to generate an electromotive force. This technology is being rapidly commercialized around small devices such as mobile phones. The magnetic induction scheme enables the transmission of up to several hundred kilowatts (kW) of power and has high efficiency, but the maximum transmission distance thereof is 1 centimeter (cm) or less, and therefore an object to be charged needs to be disposed adjacent to a charger.

The electromagnetic resonance scheme is characterized in that it uses an electric field or a magnetic field, instead of utilizing electromagnetic waves, currents, or the like. The electromagnetic resonance scheme is advantageously safe to other electronic devices and the human body since it is hardly influenced by electromagnetic waves, which may be problematic. However, the electromagnetic resonance scheme is available only at a limited distance and space, and the energy transfer efficiency thereof is somewhat low.

The short wavelength wireless power transmission scheme, simply put, the RF transmission scheme utilizes the fact that energy may be transmitted and received directly in radio-wave form. This technology is an RF wireless power transmission scheme using a rectenna. The term "rectenna" is a portmanteau of "antenna" and "rectifier", and refers to a device that directly converts RF power into DC power. In other words, the RF scheme is a technology for converting AC radio waves into DC power, and research on commercialization of the RF scheme has been actively conducted as the efficiency thereof has been improved recently.

The wireless power transmission technology may be applied not only to the mobile industry, but also to various other industries such as the IT, railroad, and home appliance industries.

Generally, power control in a wireless charging system is performed in a manner such that a wireless power receiver detects the strength of received power and transmits a predetermined power control request signal to a wireless power transmitter according to the detection result.

However, in the related art, when the wireless power receiver requests an excessive change in power, the wireless power transmitter fails to transmit the requested power within a reference time, and the wireless power receiver is reset.

### [Technical Object]

The present invention has been devised to solve the problem of the related art described above, and it is one object of the present invention to provide a wireless charging method and an apparatus and system therefor.

It is another object of the present invention to provide a wireless charging method capable of supplying power normally even in response to a request for a sudden change in transmission power from a wireless power receiver, and an apparatus and system therefor.

The technical objects to be accomplished by the present invention are not limited to the aforementioned technical objects, and other unmentioned technical objects will be clearly understood from the following description by those having ordinary skill in the art.

### [Technical Solution]

The present invention may provide a wireless charging method and an apparatus and system therefor.

According to one embodiment of the present invention, a wireless power transmission device, configured to wirelessly transmit power to a wireless power reception device, includes a power transmission unit configured to transmit a power signal via a transmission coil, a power conversion unit configured to convert a strength of power applied from an outside and transfer the strength of power to the power transmission unit, a communication unit configured to receive a packet from the wireless power reception device, and a controller configured to control the power based on a control error value received via the communication unit, wherein the controller controls the power by applying a predetermined offset to the control error value when receiving an unexpected packet in a power transfer phase.

Here, the unexpected packet in the power transfer phase may include an expected signal strength packet in a ping phase.

The control error value may be included in a control error packet received in the power transfer phase, and the controller may control the power by applying the offset to the control error value when the control error packet is not received within a preset predetermined control error packet transmission period.

The controller may receive a received power packet for identifying information on a strength of power received by the wireless power reception device via the communication unit in the power transfer phase, and may control the power by applying the offset to the control error value when the received power packet is not received within a predefined received power packet transmission period.

The controller may determine whether or not to apply the offset by checking whether or not a next received power packet is received within the received power packet transmission period when a strength of received power calculated based on the received power packet last received by the controller is within a normal range.

The controller may check a wireless power reception device, from which a next received power packet is not received within the received power packet transmission period, and may register information for identification of a receiver corresponding to the checked wireless power reception device in a power control offset application target device list.

The controller may control the power by applying the offset to the wireless power reception device when a receiver identifier included in the power control offset application target device list is acquired in an identification phase.

Here, the receiver identifier may include at least one of version information for identifying versions of software and hardware installed in the receiver, manufacturer information for identifying a manufacturer of the receiver, or device identification information for uniquely identifying the receiver.

The offset application may be released and the power may be controlled based on the control error value when a fluctuation width of the control error value is stable within a predetermined reference value for a predetermined time.

The offset may include a first offset for controlling a time required to control the power to a power level corresponding to the control error value.

In addition, the offset may include a second offset added to the control error value, and the power may be controlled based on the control error value added with the second offset.

The controller may receive a configuration packet via the communication unit, and may determine a value of the offset based on at least one of a power class or a maximum power of the wireless power reception device included in the configuration packet.

According to another embodiment of the present invention, a wireless charging method of a wireless power transmission device that wirelessly transmits power includes a ping phase of transmitting a power signal of a predetermined pattern for wireless power reception device identification, an identification phase of identifying a wireless power reception device based on a received identification packet, and a power transfer phase of controlling power based on a control error value received from the identified wireless power reception device, wherein the power is controlled by applying a predetermined offset to the control error value when an unexpected packet is received in the power transfer phase.

Here, the unexpected packet in the power transfer phase may include an expected signal strength packet in the ping phase.

The control error value may be included in a control error packet received in the power transfer phase, and the power may be controlled by applying the offset to the control error value when the control error packet is not received within a preset predetermined control error packet transmission period.

In the power transfer phase, a received power packet for identifying information on a strength of power received by the wireless power reception device may be received, and the power may be controlled by applying the offset to the control error value when the received power packet is not received within a predefined received power packet transmission period.

Whether or not to apply the offset may be determined by checking whether or not a next received power packet is received within the received power packet transmission period when a strength of received power calculated based on the last received power packet is within a normal range.

The wireless charging method may further include registering, in a power control offset application target device list, information for identification of a receiver corresponding to a wireless power reception device, from which a next received power packet is not received within the received power packet transmission period.

The power may be controlled by applying the offset to the wireless power reception device when a receiver identifier included in the power control offset application target device list is acquired in the identification phase.

Here, the receiver identifier may include at least one of version information for identifying versions of software and hardware installed in the receiver, manufacturer information for identifying a manufacturer of the receiver, or device identification information for uniquely identifying the receiver.

The offset application may be released and the power may be controlled based on the control error value when a fluctuation width of the control error value is stable within a predetermined reference value for a predetermined time.

The offset may include a first offset for controlling a time required to control the power to a power level corresponding to the control error value.

The offset may include a second offset added to the control error value, and the power may be controlled based on the control error value added with the second offset.

The wireless charging method may further include receiving a configuration packet for identifying a configuration of the identified wireless power reception device, and a value of the offset may be determined based on at least one of a power class or a maximum power of the wireless power reception device included in the configuration packet.

A further embodiment of the present invention may provide a computer readable recording medium storing a program for executing any one of the wireless charging methods.

It is to be understood that the forging aspects of the present invention are only some exemplary embodiments of the present invention and that various embodiments that incorporate technical features of the present invention will be derived and understood based on the following detailed description of the present invention by those having ordinary skill in the art.

### [Advantageous Effects]

The effects of a method, an apparatus, and a system according to the present invention will be described as follows.

The present invention may advantageously provide a wireless charging method and an apparatus and system therefor.

In addition, the present invention may provide a wireless charging method capable of supplying power normally even in response to a request for a sudden change in transmission power from a wireless power receiver, and an apparatus and system therefor.

The effects to be accomplished by the present invention are not limited to the aforementioned effects, and other unmentioned effects will be clearly understood from the following description by those having ordinary skill in the art.

### [Description of Drawings]

The accompanying drawings are included to provide a further understanding of the invention, and illustrate the embodiments of the present invention together with the following detailed description. It is to be understood, however, that the technical features of the present invention are not limited to the specific drawings, and the features disclosed in the respective drawings may be combined with each other to constitute a new embodiment.
FIG. 1 is a block diagram for explaining a wireless charging system according to an embodiment of the present invention.
FIG. 2 is a block diagram for explaining a wireless charging system according to another embodiment of the present invention.
FIG. 3 is a diagram for explaining a sensing signal transmission procedure in a wireless charging system according to an embodiment of the present invention.
FIG. 4 is a state transition diagram for explaining a wireless power transmission procedure defined in the WPC standard.
FIG. 5 is a state transition diagram for explaining a wireless power transmission procedure defined in the PMA standard.
FIG. 6 is a block diagram for explaining the structure of a wireless power transmitter according to an embodiment of the present invention.
FIG. 7 is a block diagram for explaining the structure of a wireless power receiver linked to the wireless power transmitter illustrated in FIG. 6.
FIG. 8 is a diagram for explaining a modulation and demodulation method of a wireless power signal according to an embodiment of the present invention.
FIG. 9 is a diagram for explaining a packet format according to an embodiment of the present invention.
FIG. 10 is a diagram for explaining different types of packets that may be transmitted in a Ping phase by a wireless power reception device according to the present invention.
FIG. 11 is a diagram for explaining a procedure of transmitting a first packet in the wireless power reception device according to an embodiment of the present invention.
FIG. 12 is a diagram for explaining the message format of an identification packet according to an embodiment of the present invention.
FIG. 13 is a diagram for explaining the message format of a configuration packet and a power control hold-off packet according to the present invention.
FIG. 14 is a diagram for explaining a packet transmission control method in an Identification and Configuration phase according to an embodiment of the present invention.
FIG. 15 is a diagram for explaining the type of a packet that may be transmitted in a Power Transfer phase by the wireless power reception device and the message format thereof according to an embodiment of the present invention.
FIG. 16 is a diagram for explaining a method of controlling transmission of a control error packet in the wireless power reception device according to an embodiment of the present invention.
FIG. 17 is a diagram for explaining a method of controlling transmission of a received power packet in the wireless power reception device according to an embodiment of the present invention.
FIG. 18 is a flowchart for explaining a power control method in a wireless power transmission device according to an embodiment of the present invention.
FIG. 19 is a flowchart for explaining a power control method in the wireless power transmission device according to an embodiment of the present invention.
FIG. 20 is a flowchart for explaining a power control method in the wireless power transmission device according to an embodiment of the present invention.
FIG. 21 is a flowchart for explaining a power control method in the wireless power transmission device according to an embodiment of the present invention.

### [Best Mode]

According to an embodiment of the present invention, a wireless power transmission device, configured to wirelessly transmit power to a wireless power reception device, includes a power transmission unit configured to transmit a power signal via a transmission coil, a power conversion unit configured to convert a strength of power applied from an outside and transfer the strength of power to the power transmission unit, a communication unit configured to receive a packet from the wireless power reception device, and a controller configured to control the power based on a control error value received via the communication unit. The controller may control the power by applying a predetermined offset to the control error value when receiving an unexpected packet in a power transfer phase.

### [Mode for Invention]

Hereinafter, devices and various methods, to which the embodiments of the present invention are applied, will be described in more detail with reference to the accompanying drawings. With respect to constituent elements used in the following description, suffixes "module" and "unit" are given or mingled with each other only in consideration of ease in the preparation of the specification, and do not have or serve as different meanings.

It will be understood that, in the following description, when an element is referred to as being formed "on" or "under" another element, it can be directly "on" or "under" the other element or be indirectly formed with intervening elements therebetween. It will also be understood that "on" or "under" the element may be described relative to the drawings.

In the description of the embodiments, "wireless power transmitter," "wireless power transmission device," "transmission terminal," "transmitter," "transmission device," "transmission side," and the like will be interchangeably used to refer to a device that transmits wireless power in a wireless power system, for the convenience of description. In addition, "wireless power reception device," "wireless power receiver," "reception terminal," "reception side," "reception device," "receiver," and the like will be interchangeably used to refer to a device that receives wireless power from a wireless power transmission device, for the convenience of description.

A transmitter according to the present invention may be configured as a pad type, a cradle type, an access point (AP) type, a small base station type, a stand type, a ceiling embedded type, a wall-mounted type, or the like. One transmitter may transmit power to a plurality of wireless power reception devices. To this end, the transmitter may include at least one wireless power transmission unit. Here, the wireless power transmission unit may use various wireless power transmission standards based on an electromagnetic induction scheme for charging power using an electromagnetic induction principle in which a magnetic field is generated in a power transmission terminal coil and electricity is induced in a reception terminal coil by the influence of the magnetic field. Here, the wireless power transmission unit may adopt an electromagnetic induction type wireless charging technique defined in a Wireless Power Consortium (WPC) or a Power Matters Alliance (PMA), which is a wireless charging technology standard organization.

In addition, a receiver according to an embodiment of the present invention may include at least one wireless power reception unit, and may simultaneously receive wireless power from two or more transmitters. Here, the wireless power transmission unit may adopt an electromagnetic induction type wireless charging technique defined in a Wireless Power Consortium (WPC) or a Power Matters Alliance (PMA), which is a wireless charging technology standard organization.

The receiver according to the present invention may be embedded in small electronic devices, such as a mobile phone, a smartphone, a laptop computer, a digital broadcast terminal, a personal digital assistant (PDA), a portable multimedia player (PMP), a navigation system, an MP3 player, an electric toothbrush, an electronic tag, a lighting device, a remote controller, a fishing float, and a wearable device such as a smart watch, without being limited thereto, and may be applied to any devices that may be provided with a wireless power reception unit according to the present invention and may be charged through a battery.

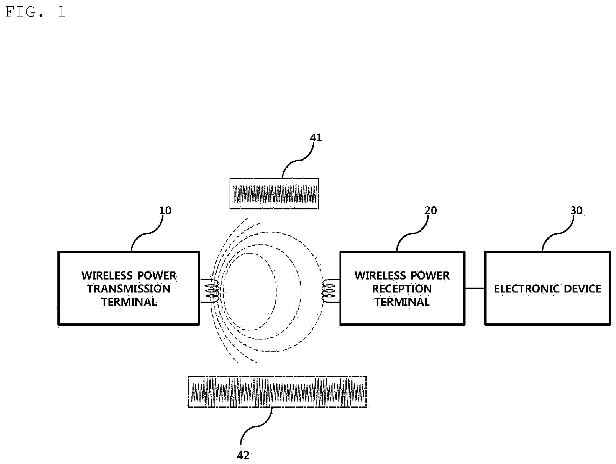

FIG. 1 is a block diagram for explaining a wireless charging system according to an embodiment of the present invention.

Referring to FIG. 1, the wireless charging system may broadly include a wireless power transmission terminal 10, which wirelessly transmits power, a wireless power reception terminal 20, which receives the transmitted power, and an electronic device 20, to which the received power is supplied.

In one example, the wireless power transmission terminal 10 and the wireless power reception terminal 20 may perform in-band communication, in which information is exchanged using the same frequency band as the operation frequency used for wireless power transmission. In another example, the wireless power transmission terminal 10 and the wireless power reception terminal 20 perform out-of-band communication, in which information is exchanged using a frequency band different from the operation frequency used for wireless power transmission.

For example, the information exchanged between the wireless power transmission terminal 10 and the wireless power reception terminal 20 may include control information as well as information about the state of the two. Here, the state information and the control information exchanged between the transmission terminal and the reception terminal will be clarified through the description of the embodiments, which will be described below.

The in-band communication and the out-of-band communication may provide bidirectional communication, but are not limited thereto. In another embodiment, the in-band communication and the out-of-band communication may provide unidirectional communication or half-duplex communication.

For example, the unidirectional communication may allow information to be transmitted only from the wireless power reception terminal 20 to the wireless power transmission terminal 10, but is not limited thereto, and may allow information to be transmitted from the wireless power transmission terminal 10 to the wireless power reception terminal 20.

In the half-duplex communication, bidirectional communication between the wireless power reception terminal 20 and the wireless power transmission terminal 10 is possible, but information may be transmitted only by any one device at any point in time.

The wireless power reception terminal 20 according to the embodiment of the present invention may acquire various pieces of state information regarding the electronic device 30. For example, the state information of the electronic device 30 may include current power usage information, information for identifying an application that is being executed, CPU usage information, battery charging rate information, and battery output voltage/current information, but is not limited thereto, and may include any other information as long as it is obtainable from the electronic device 30 and is available for wireless power control.

In particular, the wireless power transmission terminal 10 according to the embodiment of the present invention may transmit a predetermined packet, indicating whether or not to support fast charging, to the wireless power reception terminal 20. When it is checked that the connected wireless power transmission terminal 10 supports a fast charge mode, the wireless power reception terminal 20 may notify the electronic device 30 of the checked result. The electronic device 30 may display that fast charging is possible using a predetermined display unit, for example, a liquid crystal display.

In addition, a user of the electronic device 30 may select a predetermined fast charge request button displayed on the liquid crystal display to control the wireless power transmission terminal 10 so as to operate in the fast charge mode. In this case, when the fast charge request button is selected by the user, the electronic device 30 may transmit a predetermined fast charge request signal to the wireless power reception terminal 20. The wireless power reception terminal 20 may generate a charge mode packet corresponding to the received fast charge request signal and transmit the packet to the wireless power transmission terminal 10 so as to perform switching from a general low power charge mode to the fast charge mode.

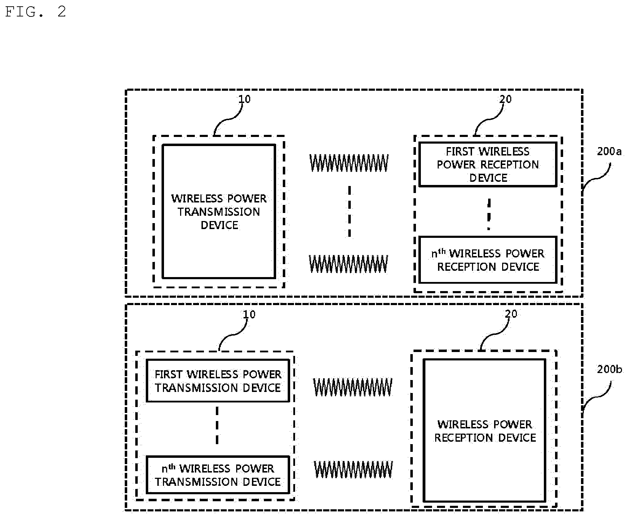

FIG. 2 is a block diagram for explaining a wireless charging system according to another embodiment of the present invention.

In one example, as illustrated by reference numeral 200a, the wireless power reception terminal 20 may include a plurality of wireless power reception devices, and the plurality of wireless power reception devices may be connected to one wireless power transmission terminal 10 so as to perform wireless charging. Here, the wireless power transmission terminal 10 may distribute power to the plurality of wireless power reception devices in a time division manner, but it is not limited thereto. In another example, the wireless power transmission terminal 10 may distribute and transmit power to the plurality of wireless power reception devices using different frequency bands allocated to the respective wireless power reception devices.

Here, the number of wireless power reception devices connectable to one wireless power transmission device 10 may be adaptively determined based on at least one of the power required by each wireless power reception device, the battery charging state, the power consumed by the electronic device, or the power available from the wireless power transmission device.

In another example, as illustrated by reference numeral 200b, the wireless power transmission terminal 10 may include a plurality of wireless power transmission devices. In this case, the wireless power reception terminal 20 may be connected to the plurality of wireless power transmission devices at the same time, and may simultaneously receive power from the connected wireless power transmission devices so as to perform charging. Here, the number of wireless power transmission devices connected to the wireless power reception terminal 20 may be adaptively determined based on the power required by the wireless power reception terminal 20, the battery charging state, the power consumed by the electronic device, and the power available from the wireless power transmission device, for example.

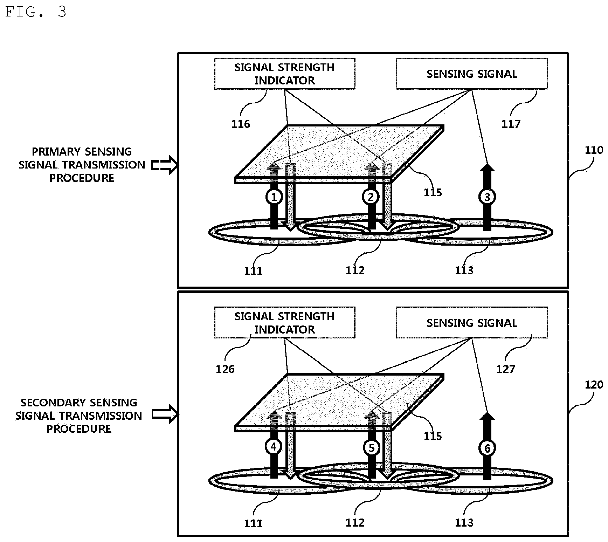

FIG. 3 is a diagram for explaining a sensing signal transmission procedure in a wireless charging system according to an embodiment of the present invention.

In one example, a wireless power transmitter may include three transmission coils 111, 112 and 113. Each of the transmission coils may partially overlap other transmission coils. The wireless power transmitter sequentially transmits predetermined sensing signals 117 and 127 (e.g., digital ping signals) in a predefined order for sensing the presence of a wireless power receiver through the respective transmission coils.

As illustrated in FIG. 3, the wireless power transmitter may sequentially transmit the sensing signal 117 via a primary sensing-signal transmission procedure, designated by reference numeral 110, and may identify the transmission coils 111 and 112 that have received a signal strength indicator 116 (or a signal intensity packet) from a wireless power receiver 115. Subsequently, the wireless power transmitter may sequentially transmit the sensing signal 127 via a secondary sensing-signal transmission procedure, designated by reference numeral 120, may identify a transmission coil that has good power transmission efficiency (or charging efficiency), among the transmission coils 111 and 112 that have received a signal strength indicator 126, in other words, the alignment state between the transmission coil and the reception coil, and may transmit power through the identified transmission coil, and in other words, may control the implementation of wireless charging.

As illustrated in FIG. 3, the reason why the wireless power transmitter performs the sensing-signal transmission procedure two times is to more accurately identify which transmission coil is well aligned with a reception coil of the wireless power receiver.

When a first transmission coil 111 and a second transmission coil 112 receive the signal strength indicators 116 and 126, as designated by reference numerals 110 and 120 in FIG. 3, the wireless power transmitter selects the most well-aligned transmission coil based on the signal strength indicator 126 received by each of the first transmission coil 111 and the second transmission coil 112, and performs wireless charging using the selected transmission coil.

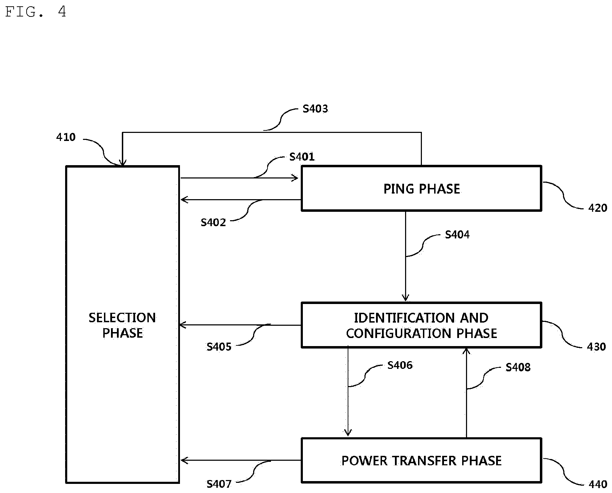

FIG. 4 is a state transition diagram for explaining a wireless power transmission procedure defined in the WPC standard.

Referring to FIG. 4, power transmission from a transmitter to a receiver according to the WPC standard may be broadly divided into a Selection phase 410, a Ping phase 420, an Identification and Configuration phase 430, and a Power Transfer phase 440.

The Selection phase 410 may be a phase in which transition is made when a specific error or a specific event is detected while power transmission begins or while power transmission is underway. Here, the specific error and the specific event will be clarified through the following description. In addition, in the Selection phase 410, the transmitter may monitor whether an object is present on the interface surface. When the transmitter detects that an object is placed on the interface surface, the transmitter may transition to the Ping phase 420 (S401). In the Selection phase 410, the transmitter may transmit an analog ping signal of a very short pulse, and may detect whether or not there is an object in the active area of the interface surface based on a change in the current of the transmission coils.

When the transmitter detects the object in the Ping phase 420, the transmitter activates the receiver, and transmits a digital ping signal to identify whether or not the receiver is a WPC standard compatible receiver. When the transmitter does not receive a response signal (e.g., a signal strength indicator) for the digital ping signal from the receiver in the Ping phase 420, the transmitter may transition back to the Selection phase 410 (S402). In addition, when the transmitter receives, from the receiver, a signal indicating completion of power transmission from the receiver (hereinafter, an End-Of-Charge signal) in the Ping phase 420, the transmitter may transition to the Selection phase 410 (S403).

When the Ping phase 420 ends, the transmitter may transition to the Identification and Configuration phase 430 for identifying the receiver and collecting information regarding the configuration and state of the receiver (S404).

In the Identification and Configuration phase 430, the transmitter may transition to the Selection phase 410 when an unexpected packet is received, when a desired packet is not received for a predefined time (timeout), when there is a packet transmission error, or when no power transfer contract is made (S405).

Once the identification and configuration of the receiver are complete, the transmitter may transition to the Power Transfer phase 240, in which the transmitter transmits wireless power (S406).

In the Power Transfer phase 440, the transmitter may transition to the Selection phase 410 when an unexpected packet is received, when a desired packet is not received for a predefined time (timeout), when violation of a preestablished power transfer contract occurs, or when charging is completed (S407).

In addition, in the Power Transfer phase 440, when the power transfer contact needs to be reconfigured due to a change in the state of the transmitter or the like, the transmitter may transition to the Identification and Configuration phase 430 (S408).

The above-mentioned power transfer contract may be set based on the state and characteristic information about the transmitter and the receiver. For example, the transmitter state information may include information on the maximum transmittable power and information on the maximum number of acceptable receivers, and the receiver state information may include information on the required power.

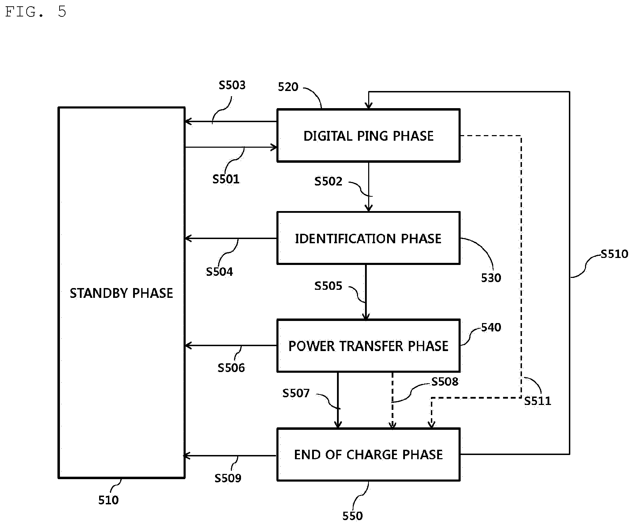

FIG. 5 is a state transition diagram for explaining a wireless power transmission procedure defined in the PMA standard.

Referring to FIG. 5, power transmission from a transmitter to a receiver according to the PMA standard may be broadly divided into a Standby phase 510, a Digital Ping phase 520, an Identification phase 530, a Power Transfer phase 540, and an End-Of-Charge phase 550.

Transition from the Standby phase 510 may be made when a specific error or a specific event is detected while a receiver identification procedure for power transmission is performed or while power transmission is underway. Here, the specific error and the specific event will be clarified through the following description. In addition, in the Standby phase 510, the transmitter may monitor whether an object is present on a charging surface. When the transmitter detects that an object is placed on the charging surface or when an RXID retry is in progress, the transmitter may transition to the Digital Ping phase 520 (S501). Here, RXID is a unique identifier assigned to a PMA compatible receiver. In the Standby phase 510, the transmitter may transmit an analog ping of a very short pulse, and may detect, based on a change in the current of the transmission coil, whether or not there is an object in the active area of the interface surface (e.g., a charging bed).

After transitioning to the Digital Ping phase 520, the transmitter transmits a digital ping signal to identify whether or not the detected object is a PMA compatible receiver. When sufficient power is supplied to the reception terminal by the digital ping signal transmitted by the transmitter, the receiver may modulate the received digital ping signal according to the PMA communication protocol, and may transmit a predetermined response signal to the transmitter. Here, the response signal may include a signal strength indicator that indicates the strength of power received by the receiver. Upon receiving a valid response signal from the receiver in the Digital Ping phase 520, the transmitter may transition to the Identification phase 530 (S502).

When a response signal is not received by the receiver or when it is determined that the receiver is not a PMA compatible receiver (i.e., Foreign Object Detection (FOD)) in the Digital Ping phase 520, the transmitter may transition to the Standby phase 510 (S503). As an example, a foreign object (FO) may be a metallic object including a coin, a key, or the like.

In the Identification phase 530, the transmitter may transition to the Standby phase 510 when the receiver identification procedure fails or when the receiver identification procedure needs to be re-performed and when the receiver identification procedure is not completed during a predefined time (S504).

When the transmitter succeeds in identifying the receiver, the transmitter may transition from the Identification phase 530 to the Power Transfer phase 540 so as to initiate charging (S505).

In the Power Transfer phase 540, the transmitter may transition to the Standby phase 510 when a desired signal is not received within a predetermined time (timeout), when a foreign object (FO) is detected, or when the voltage of the transmission coil exceeds a predefined reference value (S506).

In addition, in the Power Transfer phase 540, the transmitter may transition to the End-Of-Charge phase 550 when the temperature detected by a temperature sensor provided in the transmitter exceeds a predetermined reference value (S507).

In the End-Of-Charge phase 550, when the transmitter determines that the receiver has been removed from the charging surface, the transmitter may transition to the Standby phase 510 (S509).

In addition, when the temperature measured in the over-temperature state after the lapse of a predetermined time falls below a reference value, the transmitter may transition from the End-Of-Charge phase 550 to the Digital Ping phase 520 (S510).

In the Digital Ping phase 520 or in the Power Transfer phase 540, the transmitter may transition to the End-Of-Charge phase 550 upon receiving an End-Of-Charge (EOC) request from the receiver (S508 and S511).

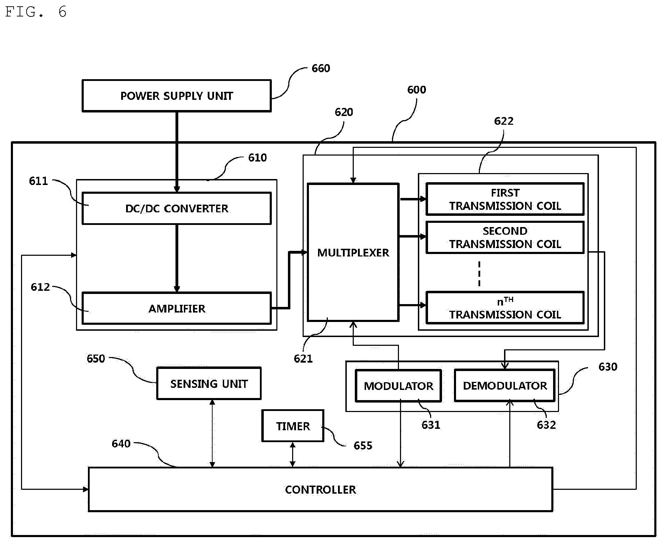

FIG. 6 is a block diagram for explaining the structure of a wireless power transmitter according to an embodiment of the present invention.

Referring to FIG. 6, the wireless power transmitter 600 may broadly include a power conversion unit 610, a power transmission unit 620, a communication unit 630, a controller 640, and a sensing unit 650. It is to be noted that the configuration of the wireless power transmitter 600 is not necessarily limited thereto, and may be configured to include a greater or smaller number of components.

As illustrated in FIG. 6, when power is supplied from the power supply unit 660, the power conversion unit 610 may convert the power to a predetermined strength of power.

To this end, the power conversion unit 610 may include a DC/DC converter 611 and an amplifier 612.

The DC/DC converter 611 may function to convert DC power, supplied from the power supply unit 650, into DC power having a specific strength in response to a control signal of the controller 640.

Here, the sensing unit 650 may measure, for example, the voltage/current of the converted DC power and provide the measured result to the controller 640. In addition, the sensing unit 650 may measure the temperature inside the wireless power transmitter 600 and provide the measured result to the controller 640 in order to enable the determination of the occurrence of overheat. In one example, the controller 640 may adaptively block the supply of power from the power supply unit 650 or block the supply of power to the amplifier 612 based on the voltage/current value measured by the sensing unit 650. To this end, a predetermined power cutoff circuit may further be provided at one side of the power conversion unit 610 in order to block the power supplied from the power supply unit 650 or to block the power to be supplied to the amplifier 612.

The amplifier 612 may adjust the strength of DC/DC converted power in response to a control signal of the controller 640. In one example, the controller 640 may receive information regarding the power reception state of a wireless power receiver and/or a power control signal through the communication unit 630, and may actively adjust the rate of amplification of the amplifier 612 in response to the received power reception state information and/or the received power control signal. In one example, the power reception state information may include information regarding the strength of a rectifier output voltage, information regarding the strength of current applied to a reception coil, and the like, without being limited thereto. The power control signal may include, for example, a signal for requesting an increase in power and a signal for asking for requesting a reduction in power.

The power transmission unit 620 may include a multiplexer 621 and a transmission coil 622. In addition, the power transmission unit 620 may further include a carrier-wave generator (not illustrated) for generating a specific operation frequency for power transmission.

The carrier-wave generator may generate a specific frequency for converting the output DC power of the amplifier 612 transferred through the multiplexer 621 into AC power having a specific frequency. In the above description, an AC signal generated by the carrier-wave generator is mixed with an output terminal of the multiplexer 621 so that AC power is generated. However, it is to be noted that this is merely one embodiment and, in another example, the AC signal may be mixed with a terminal before or after the amplifier 612.

It is to be noted that the frequencies of the AC power transferred to the respective transmission coils according to an embodiment of the present invention may be different from each other. In another embodiment of the present invention, the resonance frequencies of the respective transmission coils may be set differently through the use of a predetermined frequency controller having a function of differently adjusting LC resonance characteristics for each transmission coil.

As illustrated in FIG. 6, the power transmission unit 620 may include the multiplexer 621 for controlling the output power of the amplifier 612 to be transmitted to transmission coils, and a plurality of transmission coils 622, i.e. first to n^{th} transmission coils.

The controller 640 according to an embodiment of the present invention may transmit power by time division multiplexing for each transmission coil when a plurality of wireless power receivers are connected. For example, when three wireless power receivers, i.e., first to third wireless power receivers, for the wireless power transmitter 600 are identified via three different transmission coils, i.e., first to third transmission coils, the controller 640 may control the multiplexer 621 so that a specific transmission coil may transmit power in a specific time slot. At this time, the power to be transmitted to the corresponding wireless power receiver may be controlled according to the length of the time slot allocated for each transmission coil, but this is only one embodiment. In another example, the rate of amplification of the amplifier 612 during the time slot allocated for each transmission coil may be controlled to control the transmission power of each wireless power receiver.

The controller 640 may control the multiplexer 621 so that sensing signals may be simultaneously transmitted through the first to n^{th} transmission coils 622 during a primary sensing-signal transmission procedure. At this time, the controller 640 may identify the point in time at which the sensing signal is to be transmitted via a timer 655. When the sensing signal transmission time point has arrived, the controller may control the multiplexer 621 so as to transmit the sensing signal through a corresponding transmission coil. In one example, the timer 650 may transmit a specific event signal to the controller 640 at a predetermined cycle during a Ping Transfer phase, and the controller 640 may control the multiplexer 621 so as to transmit a digital ping signal through a corresponding transmission coil when sensing the event signal.

In addition, the controller 640 may include a predetermined transmission coil identifier for identifying through which transmission coil a signal strength indicator is received from a demodulator 632 during a primary sensing-signal transmission procedure, and may receive the signal strength indicator through the corresponding transmission coil. Subsequently, during a secondary sensing-signal transmission procedure, the controller 640 may control the multiplexer 621 so that the sensing signal may be transmitted only through the transmission coil(s) that received the signal strength indicator during the primary sensing-signal transmission procedure. In another example, when a plurality of transmission coils receives the signal strength indicator during the primary sensing-signal transmission procedure, the controller 640 may determine the transmission coil that received the signal strength indicator having the largest value to be the transmission coil to which the sensing signal is to be transmitted during the secondary sensing-signal transmission procedure, and may control the multiplexer 621 according to the determination result.

A modulator 631 may modulate a control signal generated by the controller 640, and may transmit the modulated control signal to the multiplexer 621. Here, a modulation scheme for modulating the control signal may include a frequency shift keying (FSK) modulation scheme, a Manchester coding modulation scheme, a phase shift keying (PSK) modulation scheme, a pulse width modulation scheme, and a differential bi-phase modulation scheme, for example.

The demodulator 632 may demodulate a sensed signal when sensing a signal received through the transmission coil, and may transmit the demodulated signal to the controller 640. Here, the demodulated signal may include a signal control indicator, an error correction (EC) indicator for power control during wireless power transmission, an End-Of-Charge (EOC) indicator, an overvoltage/overcurrent/overheat indicator, or the like, without being limited thereto, and may include various pieces of state information for identifying the state of the wireless power receiver.

In addition, the demodulator 632 may identify which transmission coil received the demodulated signal, and may provide the controller 640 with a predetermined transmission coil identifier corresponding to the identified transmission coil.

In addition, the demodulator 632 may demodulate the signal received through the transmission coil 623, and may transmit the demodulated signal to the controller 640. In one example, the demodulated signal may include a signal strength indicator, without being limited thereto, and may include information regarding various states of the wireless power receiver.

In one example, the wireless power transmitter 600 may acquire the signal strength indicator through in-band communication in which communication is performed with the wireless power receiver using the same frequency as that used for wireless power transmission.

In addition, the wireless power transmitter 600 may transmit wireless power using the transmission coil 622, and may exchange various pieces of information with the wireless power receiver through the transmission coil 622. In another example, it is to be noted that the wireless power transmitter 600 may include a separate coil corresponding to each transmission coil 622, i.e. each of the first to n^{th} transmission coils, and may perform in-band communication with the wireless power receiver using the separate coil provided therein.

Although the wireless power transmitter 600 and the wireless power receiver have been described with reference to FIG. 6 as performing in-band communication by way of example, this is merely an example, and the wireless power transmitter and the wireless power receiver may perform short-range bidirectional communication via a frequency band different from the frequency band used for wireless power signal transmission. For example, the short-range bidirectional communication may be any one of low power Bluetooth communication, RFID communication, UWB communication, and Zigbee communication.

In particular, the wireless power transmitter 600 according to the embodiment of the present invention may adaptively provide a fast charge mode and a general low power charge mode in response to a request of the wireless power receiver.

The wireless power transmitter 600 may transmit a signal of a predetermined pattern, which will hereinafter be called a "first packet" for convenience of description, when the fast charge mode is supported. The wireless power receiver 600 may identify that the wireless power transmitter 600 being connected thereto is capable of fast charging when the first packet is received.

In particular, the wireless power receiver may transmit a first response packet, which requests fast charging, to the wireless power transmitter 6000 when fast charging is required.

In particular, the wireless power transmitter 600 may automatically switch to the fast charge mode so as to initiate fast charging when a predetermined time has passed after the first response packet is received.

For example, when transition to the Power Transfer phase 440 or 540 of FIG. 4 or 5 is made, the controller 640 of the wireless power transmitter 600 may perform control to transmit the first packet via the transmission coil 622, but this is only one embodiment, and in another example of the present invention, the first packet may be transmitted in the Identification and Configuration phase 430 of FIG. 4 or in the Identification phase 530 of FIG. 5.

It is to be noted that, in another embodiment of the present invention, information that may identify whether or not fast charging is supported may be encoded into and transmitted together with a digital ping signal transmitted by the wireless power transmitter 600.

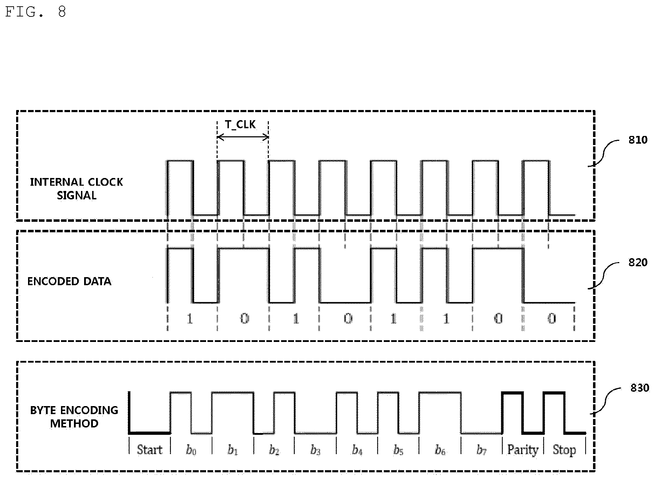

The wireless power receiver may transmit a predetermined charge mode packet, in which a charge mode is set to fast charging, to the wireless power transmitter 600 when fast charging is needed at any point in time during the Power Transfer phase. Here, the detailed configuration of the charge mode packet will be clarified through the following description of FIGs. 8 to 12. Of course, the wireless power transmitter 600 and the wireless power receiver may control the operation thereof so that power corresponding to the fast charge mode may be transmitted and received when the charge mode is changed to the fast charge mode. For example, when the charge mode is changed from a normal low power charge mode to the fast charge mode, overvoltage determination criteria, over temperature determination criteria, low-voltage/high-voltage determination criteria, an optimum voltage level, a power control offset, and the like may be changed and set.

In one example, when the charge mode is changed from the normal low power charge mode to the fast charge mode, the threshold voltage for determining an overvoltage may be set to be high enough to allow fast charging. In another example, the threshold temperature for determining whether or not overheating occurs may be set to be high in consideration of an increase in temperature due to fast charging. In a further example, the power control offset value, which means the minimum level at which power at the transmission terminal is controlled, may be set to a larger value than that in the general low power charge mode so as to allow power to quickly converge on a desired target power level in the fast charge mode.

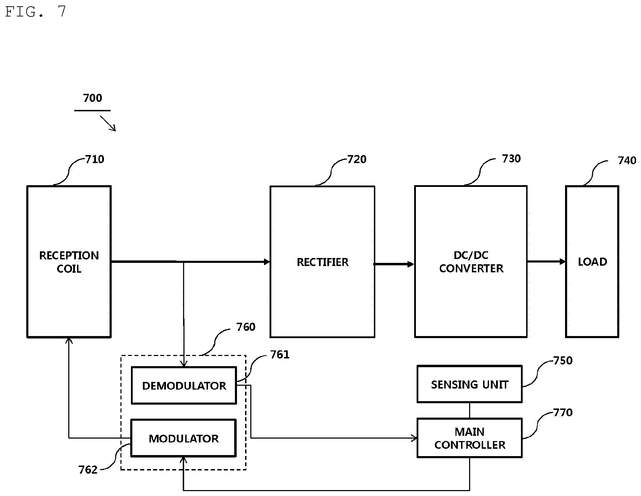

FIG. 7 is a block diagram for explaining the structure of a wireless power receiver linked to the wireless power transmitter illustrated in FIG. 6.

Referring to FIG. 7, the wireless power receiver 700 may include a reception coil 710, a rectifier 720, a DC/DC converter 730, a load 740, a sensing unit 750, a communication unit 760, and a main controller 770. Here, the communication unit 760 may include a demodulator 761 and a modulator 762.

Although the wireless power receiver 700 in the example of FIG. 7 is illustrated as being capable of exchanging information with the wireless power transmitter 600 through in-band communication, this is only one embodiment. The communication unit 760 according to another embodiment of the present invention may provide short-range bidirectional communication through a frequency band different from the frequency band used for wireless power signal transmission.

The AC power received via the reception coil 710 may be transferred to the rectifier 720. The rectifier 720 may convert the AC power into DC power and transmit the DC power to the DC/DC converter 730. The DC/DC converter 730 may convert the strength of DC power output from the rectifier into a specific strength required by the load 740 and transmit the converted strength of power to the load 740.

The sensing unit 750 may measure the strength of output DC power of the rectifier 720 and provide the measured strength of power to the main controller 770. In addition, the sensing unit 750 may measure the strength of current applied to the reception coil 710 based on the reception of wireless power and transmit the measured result to the main controller 770. In addition, the sensing unit 750 may measure the temperature inside the wireless power receiver 700 and provide the measured temperature value to the main controller 770.

In one example, the main controller 770 may compare the measured strength of the rectifier output DC power with a predetermined reference value to determine whether or not an overvoltage is generated. When the determination result is that an overvoltage is generated, the main controller may generate a predetermined packet, which indicates that an overvoltage has been generated, and transmit the packet to the modulator 762. Here, the signal modulated by the modulator 762 may be transmitted to the wireless power transmitter 600 through the reception coil 710 or a separate coil (not illustrated). In addition, when the strength of the rectifier output DC power is equal to or greater than a predetermined reference value, the main controller 770 may determine that a sensing signal has been received. When receiving the sensing signal, the main controller may perform control to transmit a signal strength indicator corresponding to the sensing signal to the wireless power transmitter 600 via the modulator 762. In another example, the demodulator 761 may demodulate an AC power signal between the reception coil 710 and the rectifier 720 or an output DC power signal of the rectifier 720 so as to identify whether or not the sensing signal has been received, and may provide the result of identification to the main controller 770. At this time, the main controller 770 may perform control to transmit the signal strength indicator corresponding to the sensing signal via the modulator 761.

In particular, the main controller 770 according to the embodiment of the present invention may determine whether or not the connected wireless power transmitter is a wireless power transmitter that is capable of fast charging based on the information demodulated by the demodulator 760.

In addition, when a predetermined fast charge request signal, which requests fast charging, is received from the electronic device 30 of FIG. 1, the main controller 770 may generate a charge mode packet corresponding to the received fast charge request signal and transmit the packet to the modulator 761. Here, the fast charge request signal from the electronic device may be received according to user menu selection on a predetermined user interface.

When it is checked that the connected wireless power transmitter supports the fast charge mode, the main controller 770 according to another embodiment of the present invention may automatically request the wireless power transmitter for fast charging based on the remaining charge of a battery, or may control the wireless power transmitter so as to interrupt fast charging and switch to the normal low power charge mode.

The main controller 770 according to another embodiment may monitor the power consumption of the electronic device during charging in the general low power charge mode in real time. When the power consumption of the electronic device is equal to or greater than a predetermined reference value, the main controller 770 may generate a predetermined charge mode packet, which requests switching to the fast charge mode, and transmit the packet to the modulator 761.

The main controller 770 according to another embodiment of the present invention may determine whether overheating occurs by comparing the internal temperature value measured by the sensing unit 750 with a predetermined reference value. When overheating occurs during fast charging, the main controller 770 may generate and transmit a charge mode packet for switching the wireless power transmitter to the general low power charge mode.

The main controller 770 according to another embodiment of the present invention may determine whether or not a change in charge mode is necessary based on at least one of the battery charging rate, the internal temperature, the intensity of the rectifier output voltage, the usage rate of a CPU mounted in the electronic device, or user menu selection, and when the determination result is that a change in the charge mode is necessary, may generate a charge mode packet including the changed charge mode value and transmit the generated charge mode packet to the wireless power transmitter.

FIG. 8 is a diagram for explaining a modulation and demodulation method of a wireless power signal according to an embodiment of the present invention.

As illustrated by reference numeral 810 in FIG. 8, the wireless power transmission terminal 10 and the wireless power reception terminal 20 may encode or decode a transmission target packet based on internal clock signals having the same cycle.

Hereinafter, a method of encoding a transmission target packet will be described in detail with reference to FIGs. 1 to 8.

Referring to FIG. 1, when the wireless power transmission terminal 10 or the wireless power reception terminal 20 does not transmit a specific packet, a wireless power signal may be an alternating current signal that has a specific frequency and is not modulated, as illustrated by reference numeral 41 in FIG. 1. On the other hand, when the wireless power transmission terminal 10 or the wireless power reception terminal 20 transmits a specific packet, a wireless power signal may be an alternating current signal modulated by a specific modulation method, as illustrated by reference numeral 42 in FIG. 1. For example, the modulation scheme may include an amplitude modulation scheme, a frequency modulation scheme, a frequency and amplitude modulation scheme, a phase modulation scheme, or the like, but is not limited thereto.

Binary data of a packet generated by the wireless power transmission terminal 10 or the wireless power reception terminal 20 may be subjected to differential bi-phase encoding, as illustrated by reference numeral 820. Specifically, the differential bi-phase encoding undergoes state transitions two times in order to encode data bit "1", and undergoes state transition once in order to encode data bit "0". That is, the data bit "1" may be encoded so that transition between the HI state and the LO state occurs at the rising edge and the falling edge of the clock signal, and the data bit "0" may be encoded so that transition between the HI state and the LO state occurs at the rising edge of the clock signal.

The encoded binary data may be subjected to a byte encoding method illustrated by reference numeral 830. Referring to reference numeral 830, a byte encoding method according to the embodiment may be a method of inserting, with respect to an 8-bit encoded binary bitstream, a start bit and a stop bit for identifying the start and the type of the bitstream and a parity bit for detecting whether or not an error occurs in the bitstream (byte).

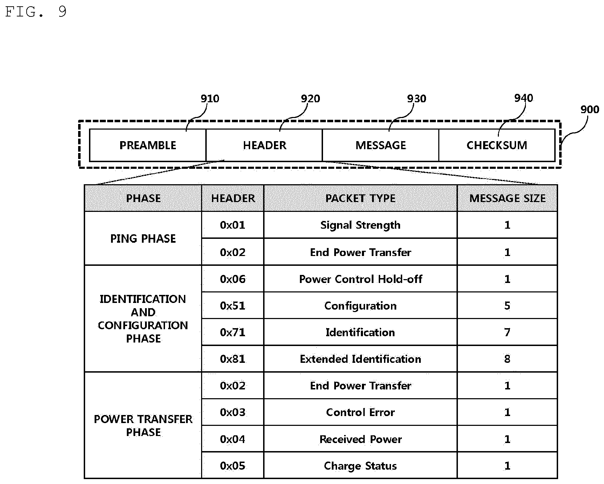

FIG. 9 is a diagram for explaining a packet format according to an embodiment of the present invention.

Referring to FIG. 9, a packet format 900 used for information exchange between the wireless power transmission terminal 10 and the wireless power reception terminal 20 may include a preamble 910 field for acquiring synchronization for the demodulation of a packet and identifying an accurate start bit of the packet, a header 920 field for identifying the type of a message included in the packet, a message 930 field for transmitting the content of the packet (or a payload), and a checksum 940 field for identifying whether or not an error has occurred in the packet.

As illustrated in FIG. 9, a packet reception terminal may identify the size of the message 930 included in the packet based on the value of the header 920.

In addition, the header 920 may be defined for each phase of a wireless power transmission procedure, and some values of the header 920 may be defined to be the same in different phases. For example, referring to FIG. 9, it is to be noted that the header value corresponding to power transfer interruption in the Ping phase and the header value corresponding to power transfer interruption in the Power Transfer phase may be equal to 0 x 02.

The message 930 includes data to be transmitted from a transmission terminal of the packet. For example, the data included in the field of the message 930 may be a report, a request, or a response to the other party, but is not limited thereto.

The packet 900 according to another embodiment of the present invention may further include at least one of transmission terminal identification information for identifying the transmission terminal that has transmitted the packet or reception terminal identification information for identifying the reception terminal that is to receive the packet. Here, the transmission terminal identification information and the reception terminal identification information may include IP address information, MAC address information, product identification information, and the like, but are not limited thereto, and may be any other information as long as it enables discrimination of a reception terminal and a transmission terminal in a wireless charging system.

The packet 900 according to a further embodiment of the present invention may further include predetermined group identification information for identifying a reception group when it is necessary for the packet to be received by a plurality of devices.

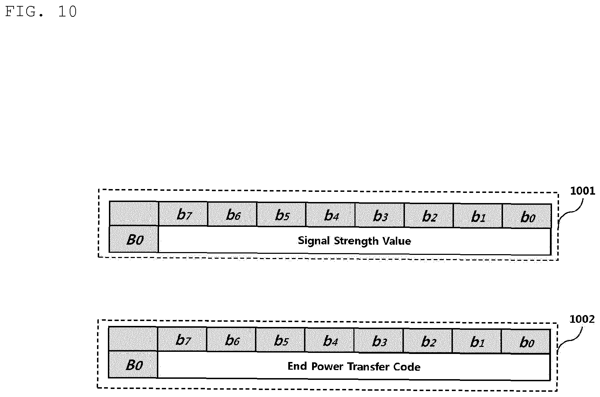

FIG. 10 is a diagram for explaining different types of packets that may be transmitted in the Ping phase by a wireless power reception device according to the present invention.

As illustrated in FIG. 10, the wireless power reception device may transmit a signal strength packet or a power transfer interruption packet.

Referring to reference numeral 1001 in FIG. 10, the message format of the signal strength packet according to the embodiment may include a signal strength value (control error value) having a size of 1 byte. The signal strength value may indicate the degree of coupling between a transmission coil and a reception coil, and may be a value calculated based on the rectifier output voltage in the Digital Ping phase, the open circuit voltage measured in an output cutoff switch or the like, and the strength of received power, for example. The signal strength value may range from a minimum of 0 to a maximum of 255, and may have a value of 255 when the actually measured value for a particular variable is equal to the maximum value Umax of the variable.

For example, the signal strength value may be calculated as U/Umax * 256.

Referring to reference numeral 1002 in FIG. 10, the message format of the power transfer interruption packet according to the embodiment may include an end-power-transfer code having the size of 1 byte.

The reasons why the wireless power reception device requests the wireless power transmitter to interrupt power transfer may include charge completion, internal faults, over-temperature, over-voltage, over-current, battery failure, reconfiguration, and lack of response, for example, but are not limited thereto. It is to be noted that the end-power-transfer code may be further defined so as to correspond to each new power transfer interruption reason.

A charge completion code may be used to indicate that charging of a receiver battery is completed. An internal fault code may be used when a software or logical error in the internal operation of the receiver is detected.

Over-temperature/over-voltage/over-current codes may be used when the temperature, voltage, or current value measured in the receiver exceeds a defined threshold.

A battery failure code may be used when it is determined that a problem has arisen in the receiver battery.

A reconfiguration code may be used when renegotiation is required for power transmission conditions. A no-response code may be used when it is determined that the response of the transmitter with respect to a control error packet, i.e., an increase or decrease in the strength of power, is not normal.

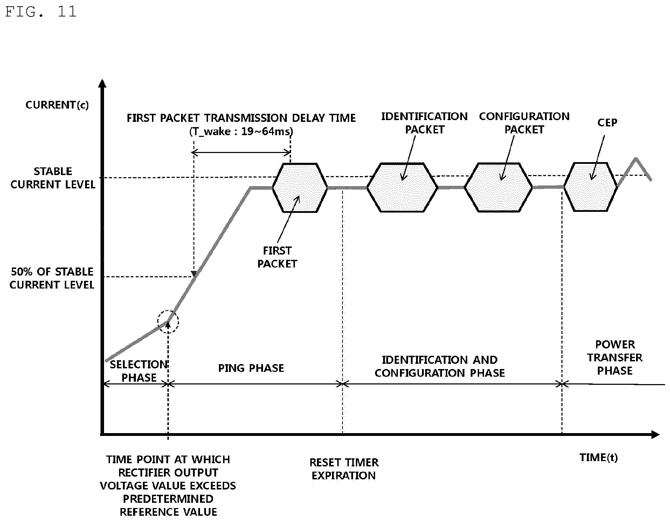

FIG. 11 is a diagram for explaining a procedure of transmitting a first packet in the wireless power reception device according to an embodiment of the present invention.

Referring to FIG. 11, when it is detected that the rectifier output voltage is equal to or greater than a predetermined reference value in the Selection phase, the wireless power reception device may immediately transition to the Ping phase. When the current level of the reception coil exceeds the predetermined reference value in the Ping phase, it is necessary to transmit a first packet within a predefined time that may be maximally delayed for the transmission of the first packet (hereinafter referred to simply as "first packet transmission delay time"). For example, the reference value for transition from the Selection phase to the Ping phase may be defined as 50% of a predefined stable current level value at the reception terminal. Here, the first packet transmission delay time may be 19∼64 ms, but is not limited thereto. In addition, the wireless power reception device may also determine the first packet transmission delay time and transmit the first packet transmission delay time determined via a configuration packet to a wireless power transmission device.

In one example, when the first packet is not received within a predetermined ping time window T_ping_time_window after the current value of the transmission terminal exceeds 50% of the stable current level, the wireless power transmission device may interrupt power signal transmission within a predetermined end time T_terminate. Here, the interruption of the power signal transmission may mean the interruption of digital ping signal transmission, but is not limited thereto, and may mean that the wireless power transmission device interrupts digital ping signal transmission and returns to the Selection phase so as to transmit an analog ping signal.

In addition, when the wireless power transmission device determines not to enter the Identification and Configuration phase after receiving a signal strength packet as the first packet, the wireless power transmission device may interrupt power signal transmission within a predetermined expiration time T_expire after the point in time at which reception of the signal strength packet starts. Here, that the wireless power transmission device does not enter the Identification and Configuration phase after receiving the first packet may mean that the wireless power transmission device enters the Selection phase.

In addition, the wireless power transmission device may interrupt power signal transmission within the expiration time T_expire after it is checked that the first packet is not received normally.

In addition, when a first packet other than the signal strength packet (e.g., an power transfer interruption packet) is received normally, the wireless power transmission device may interrupt power signal transmission within the expiration time T_expire after receiving the packet.

In addition, the wireless power transmission device may also determine an offset value to be applied to a control error value, which will described below, based on at least one of the power class or the maximum power of the wireless power reception device included in the configuration packet. In one example, the offset value in a wireless power reception device having a high power class may be determined to be higher than that in a wireless power reception device having a low power class. In another example, the offset value may be determined such that the strength of power controlled according to the sum of the control error value and the offset value does not exceed the maximum power of a corresponding receiver.

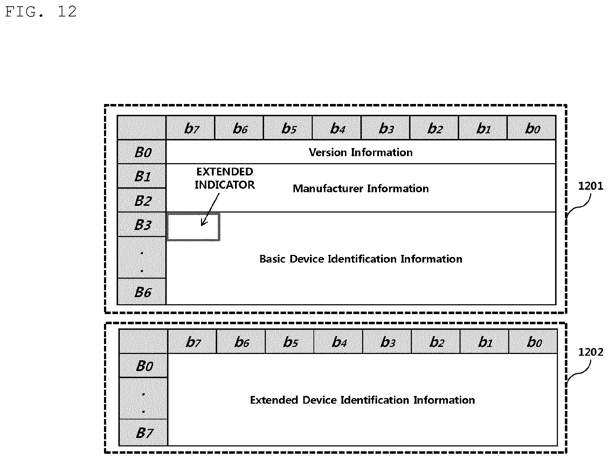

FIG. 12 is a diagram for explaining the message format of an identification packet according to an embodiment of the present invention.

Referring to FIG. 12, the message format of the identification packet may include a version information field, a manufacturer information field, an extension indicator field, and a basic device identification information field.

In the version information field, revision version information of the standard applied to the wireless power reception device may be recorded.

In the manufacturer information field, a predetermined identification code for identifying the manufacturer that manufactured the wireless power reception device may be recorded.

The extension indicator field may include an indicator for identifying whether an extended identification packet including extended device identification information exists. For example, when the extension indicator value is 0, this means that no extended identification packet exists, and when the extended indicator value is 1, this means that an extended identification packet exists after an identification packet.

Referring to reference numerals 1201 and 1202, when the extended indicator value is 0, a device identifier for the corresponding wireless power receiver may be a combination of manufacturer information and basic device identification information. On the other hand, when the extended indicator value is 0, the device identifier for the wireless power receiver may be a combination of manufacturer information, basic device identification information, and extended device identification information.

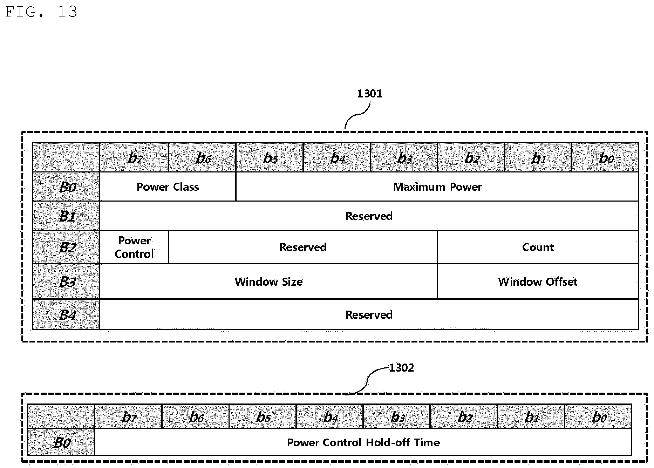

FIG. 13 is a diagram for explaining the message format of a configuration packet and a power control hold-off packet according to the present invention.

As illustrated by reference numeral 1301 in FIG. 13, the message format of the configuration packet may have a length of 4 bytes, and may include a power class field, a maximum power field, a power control field, a count field, a window size field, and a window offset field, for example.

In the power class field, the power class assigned to the corresponding wireless power receiver may be recorded.

In the maximum power field, the strength value of the maximum power that may be provided at a rectifier output terminal of the wireless power receiver may be recorded.

For example, when the power level is "a" and the maximum power is "b", the desired maximum power amount Pmax to be provided at the rectifier output terminal of the wireless power reception device may be calculated as (b/2)*10a.

The power control field may be used to indicate which algorithm needs to be used to control power in the wireless power transmitter. For example, when the power control field value is 0, this may mean the application of a power control algorithm defined in the standard, and when the power control field value is 1, this may mean that power control is performed according to an algorithm defined by the manufacturer.

The count field may be used to record the number of option configuration packets that are to be transmitted by the wireless power reception device in the Identification and Configuration phase.

The window size field may be used to record the size of a window for calculating average received power. For example, the window size may be a positive integer value that is greater than zero and has a value of 4 ms.

In the window offset field, information for identifying the time from the point in time at which an average received power calculation window ends to the point in time at which transmission of a next received power packet starts may be recorded. For example, the window offset may be a positive integer value that is greater than zero and has a value of 4 ms.

Referring to reference numeral 1302, the message format of the power control hold-off packet may include a power control hold-off time T_delay. The power control hold-off packet may be transmitted a plurality of times during the Identification and Configuration phase. For example, up to seven power control hold-off packets may be transmitted. The power control hold-off time T_delay may have a value between a predefined minimum power control hold-off time T_min (5 ms) and a predefined maximum power control hold-off time T max (205 ms). The wireless power transmission device may perform power control using the power control hold-off time of the last received power control hold-off packet in the Identification and Configuration phase. In addition, the wireless power transmission device may use the T min value as the T_delay value when no power control hold-off packet is received in the Identification and Configuration phase.

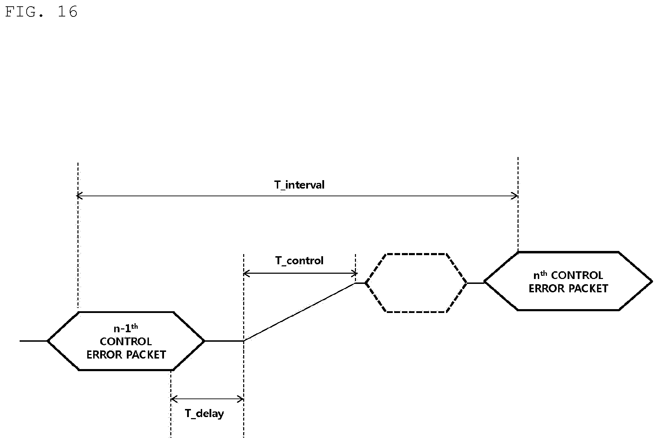

The power control hold-off time may be the time required for the wireless power transmission device to wait without performing power control before performing actual power control after receiving the latest control error packet, as illustrated in FIG. 16.

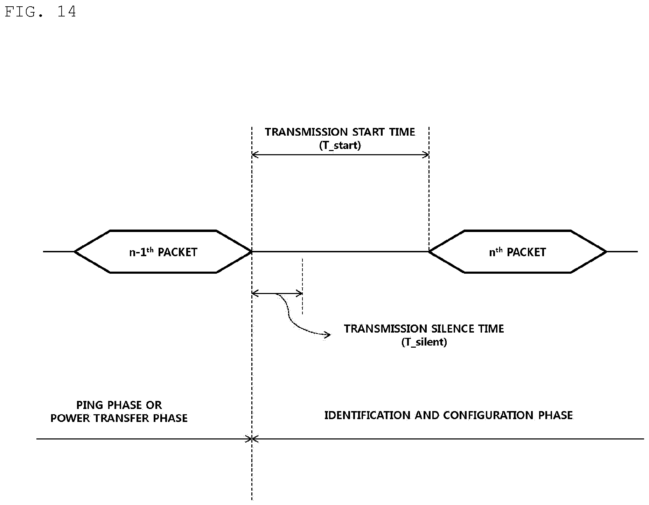

FIG. 14 is a diagram for explaining a packet transmission control method in the Identification and Configuration phase according to an embodiment of the present invention.

Referring to FIG. 14, when an n-1^{th} packet is received in the Ping phase or in the Power Transfer phase, the wireless power reception device may transition to the Identification and Configuration phase.

At this time, the wireless power reception device performs control so as not to transmit any packets during a predetermined transmission silence time T_silent after receiving the n-1^{th} packet.

The wireless power reception device may transmit an n^{th} packet when a predetermined transmission start time T_start has passed after receiving the n-1^{th} packet.

For example, the last packet received before transition from the Ping phase to the Identification and Configuration phase may be a configuration packet. On the other hand, the last packet received before transition from the Power Transfer phase to the Identification and Configuration phase may be a power transfer interruption packet.

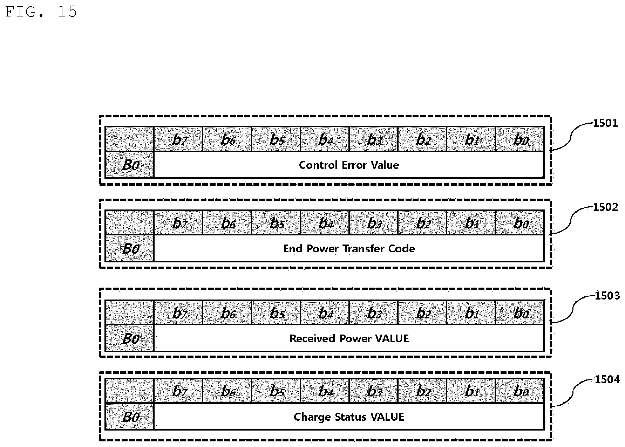

FIG. 15 is a diagram for explaining the type of a packet that may be transmitted in the Power Transfer phase by the wireless power reception device and the message format thereof according to an embodiment of the present invention.

Referring to FIG. 15, a packet that may be transmitted by the wireless power reception device in the Power Transfer phase may include a control error packet, a power transfer interruption packet, a received power packet, a charge status packet), and packets defined for respective manufacturers, for example.

Reference numeral 1501 denotes the message format of a control error packet having a 1-byte control error value. Here, the control error value may be an integer value ranging from -128 to +127. When the control error value is negative, the transmission power of the wireless power transmission device may decrease, and when the control error value is positive, the transmission power of the wireless power transmission device may increase.

Reference numeral 1502 denotes the message format of a control error packet having a 1-byte end-power-transfer code. Here, a description of the end-power-transfer code will be replaced with the above description of FIG. 10.

Reference numeral 1503 denotes the message format of a received power packet having a 1-byte received power value. Here, the received power value may correspond to the average rectifier received power value calculated during a predetermined period. The actually received power amount P_{received} may be calculated based on the maximum power and the power class included in a configuration packet 1301. For example, the actually received power amount may be calculated as (received power value/128) * (maximum power/2) * (10^{power class}).

Reference numeral 1504 denotes the message format of a charge status packet having a 1-byte charge status value. The charge status value may indicate the battery charge amount of the wireless power reception device. For example, a charge status value of 0 may indicate a fully discharged state, a charge status value of 50 may indicate a 50%-charged status, and a charge status value of 100 may indicate a fully charged status. When the wireless power reception device does not include a rechargeable battery or when the wireless power reception device is not capable of providing charge status information, the charge status value may be set to OxFF.

FIG. 16 is a diagram for explaining a method of controlling transmission of a control error packet in the wireless power reception device according to an embodiment of the present invention.

As illustrated in FIG. 16, when an n-1^{th} control error packet transmitted by the wireless power reception device is received by the wireless power transmission device, the wireless power transmission device may defer power control for a power control hold-off time T_delay received via a power control hold-off packet, and thereafter, may perform power control based on a control error value included in the n-1^{th} control error packet for a predetermined power control time T_control. The wireless power reception device may generate and transmit a control error packet at a predetermined control error packet transmission period T_interval.

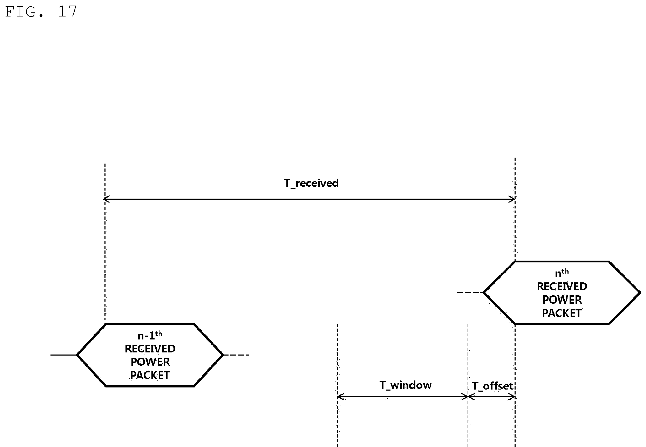

FIG. 17 is a diagram for explaining a method of controlling transmission of a received power packet in the wireless power reception device according to an embodiment of the present invention.

Referring to FIG. 17, the wireless power reception device may generate a received power packet at a predetermined received power packet transmission period T_received and transmit the packet to the wireless power transmission device.

The window size T_window illustrated in FIG. 17 means the window size for calculating average received power. For example, the window size may be a positive integer value that is greater than zero and has a value of 4 ms.

In addition, the window offset T_offset illustrated in FIG. 17 indicates the time from the point in time at which the average received power calculation window ends to the point in time at which transmission of a next received power packet starts. For example, the window offset may be a positive integer value that is greater than zero and has a value of 4 ms.

The wireless power reception device may determine the point in time at which the average received power needs to be calculated and the point in time at which the received power packet is transmitted based on the control error packet transmission period T_interval, the window size T_window, and the window offset T_offset. In addition, the wireless power reception device may also determine the time at which a control error packet needs to be received based on the control error packet transmission period T_interval, the window size T_window, and the window offset T_offset.

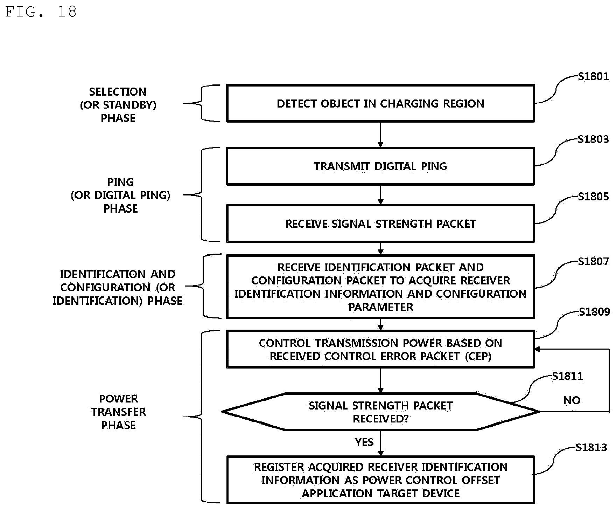

FIG. 18 is a flowchart for explaining a power control method in a wireless power transmission device according to an embodiment of the present invention.

Referring to FIG. 18, when detecting an object in a charging area in the Selection (or Standby) phase, the wireless power transmission device may transition to the Ping (or Digital Ping) phase so as to transmit a digital ping signal and receive a signal strength packet (S1801 to S1805).

When receiving the signal strength packet, the wireless power transmission device may transition to the Identification and Configuration (or Identification) phase. Then, by receiving an identification packet and a configuration packet in the Identification and Configuration (or Identification) phase, the wireless power transmission device may acquire identification information and various configuration parameters regarding a corresponding wireless power reception device (S1807). Here, a description of the identification information and the configuration parameters will be replaced with the above description of FIGs. 1 to 17.

When the configuration packet is received normally, the wireless power transmission device may transition to the Power Transfer phase to receive a control error packet and perform transmission power control based on a control error value included in the received control error packet (S1809).

The wireless power transmission device may check whether a packet that cannot received during the Power Transfer phase has been received (S1811). In one example, the packet that cannot be received during the Power Transfer phase may include a signal strength packet, but this is only one embodiment. In another example, the packet that cannot be received during the Power Transfer phase may further include any one of an identification packet, a configuration packet, a power control hold-off packet, and a packet defined by the manufacturer for the Ping phase and the Identification and Configuration phase.

When the checking result is that the packet that cannot be received during the Power Transfer phase has been received, the wireless power transmission device may register receiver identification information obtained in step 1807 as a device to which power control offset is applied (S1813).

In one example, the wireless power reception device may generate an internal reset when a desired power is not received from the wireless power transmission device when instantaneous high power consumption occurs. In this case, the wireless power transmission device may continuously transmit a power signal by maintaining the Power Transfer phase. The wireless power reception device may again enter the Ping phase according to the reset to transmit a signal strength packet.

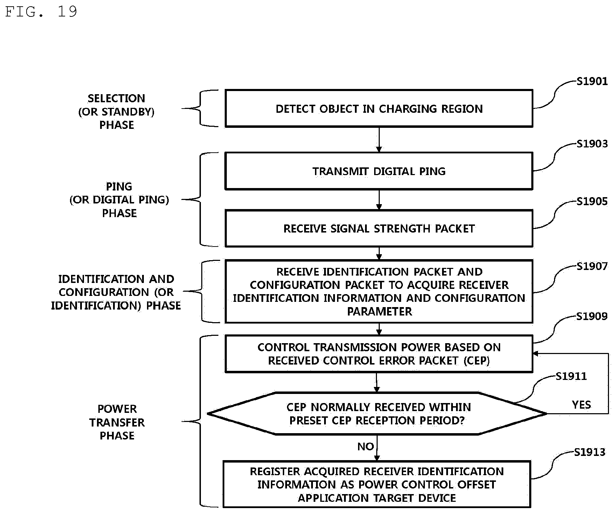

FIG. 19 is a flowchart for explaining a power control method in the wireless power transmission device according to an embodiment of the present invention.

Referring to FIG. 19, when detecting an object in the charging area in the Selection (or Standby) phase, the wireless power transmission device may transition to the Ping (or Digital Ping) phase so as to transmit a digital ping signal and receive a signal strength packet (S1901 to S1905).

When receiving the signal strength packet, the wireless power transmission device may transition to the Identification and Configuration (or Identification) phase. Then, by receiving an identification packet and a configuration packet in the Identification and Configuration (or Identification) phase, the wireless power transmission device may acquire identification information and various configuration parameters regarding the corresponding wireless power reception device (S1907). Here, a description of the identification information and the configuration parameters will be replaced with the above description of FIGs. 1 to 17.

When the configuration packet is received normally, the wireless power transmission device may transition to the Power Transfer phase to receive a control error packet and perform transmission power control based on a control error value included in the received control error packet (S1909).

The wireless power transmission device may check whether a control error packet is received normally within a preset control error packet reception period T_interval during the Power Transmission phase (S1911).

When the checking result is that the control error packet is not received normally within the preset control error packet reception period T_interval, the wireless power transmission device may register the receiver identification information obtained in step 1907 as a device to which the power control offset is applied (S1913).

When the checking result in step 1911 is that the control error packet has been received normally within the preset control error packet reception period T_interval, the wireless power transmission device may return to step 1909.

In one example, the wireless power reception device may generate an internal reset when a desired power is not received from the wireless power transmission device when instantaneous high power consumption occurs. In this case, the wireless power reception device may fail to transmit the control error packet at a predetermined control error packet transmission period (T_interval).

In another example, the wireless power reception device may transmit a control error signal to the wireless power transmission device in order to request a sudden increase in transmission power when instantaneous high power consumption occurs. However, the wireless power transmission device may not rapidly change and transmit the power required by the wireless power reception device using a built-in power control algorithm. The sudden change in transmission power may not only cause failure of the wireless power transmission device but may also cause failure of the wireless power reception device. Accordingly, a general power control algorithm is designed to achieve smooth power control. In this case, the wireless power transmission device may require a time greater than a predefined time T_control in order to increase power so as to correspond to a received control error value. At this time, the wireless power reception device may determine that power control is not performed normally and interrupt the transmission of the control error packet.

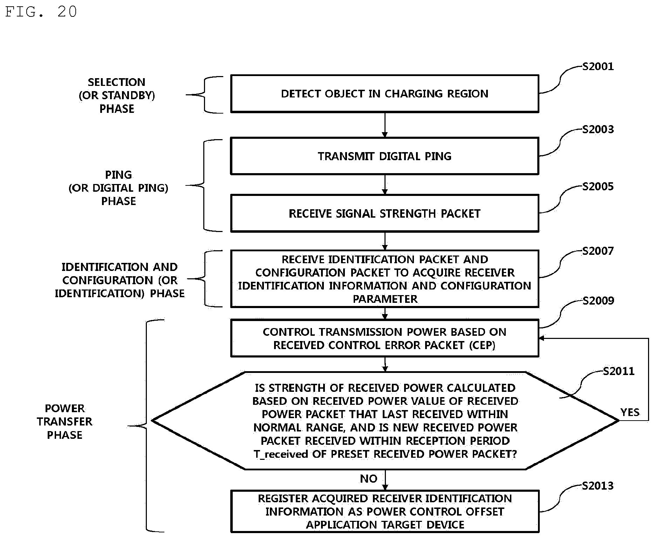

FIG. 20 is a flowchart for explaining a power control method in the wireless power transmission device according to an embodiment of the present invention.

Referring to FIG. 20, when detecting an object in a charging area in the Selection (or Standby) phase, the wireless power transmission device may transition to the Ping (or Digital Ping) phase so as to transmit a digital ping signal and receive a signal strength packet (S2001 to S2005).

When receiving the signal strength packet, the wireless power transmission device may transition to the Identification and Configuration (or Identification) phase. Then, by when receiving an identification packet and a configuration packet in the Identification and Configuration (or Identification) phase, the wireless power transmission device may acquire identification information and various configuration parameters regarding the corresponding wireless power reception device (S2007). Here, a description of the identification information and the configuration parameters will be replaced with the above description of FIGs. 1 to 17.

When the configuration packet is received normally, the wireless power transmission device may transition to the Power Transfer phase to receive a control error packet and perform transmission power control based on a control error value included in the received control error packet (S2009).

The wireless power transmission device may check whether a received power amount, which is calculated based on a received power value of a received power packet, which is a last packet received during the Power Transfer phase, is within a normal range and whether a new received power packet is received within a preset received power packet reception period T_received (S2011).

When the checking result is that no new received power packet is received within the received power packet reception period T_received, the wireless power transmission device may register the receiver identification information acquired in step 2007 as a device to which the power control offset is applied (S2013).

When the checking result in step 2011 is that a new received power packet is received within the received power packet reception period T_received, the wireless power transmission device may return to step 2009.

In one example, the wireless power reception device may generate an internal reset when a desired power is not received from the wireless power transmission device when instantaneous high power consumption occurs. In this case, the wireless power reception device may fail to transmit the received power packet at the preset received power packet transmission period T_interval.

In another example, the wireless power reception device may transmit a control error signal to the wireless power transmission device in order to request a sudden increase in transmission power when instantaneous high power consumption occurs. However, the wireless power transmission device may not rapidly change and transmit the power required by the wireless power reception device using a built-in power control algorithm. The sudden change in transmission power may not only cause failure of the wireless power transmission device but may also cause failure of the wireless power reception device. Accordingly, a general power control algorithm is designed to achieve smooth power control. In this case, the wireless power transmission device may require a time greater than a predefined time T_control in order to increase power so as to correspond to the received control error value. At this time, the wireless power reception device may determine that power control is not performed normally and interrupt the transmission of the control error packet.

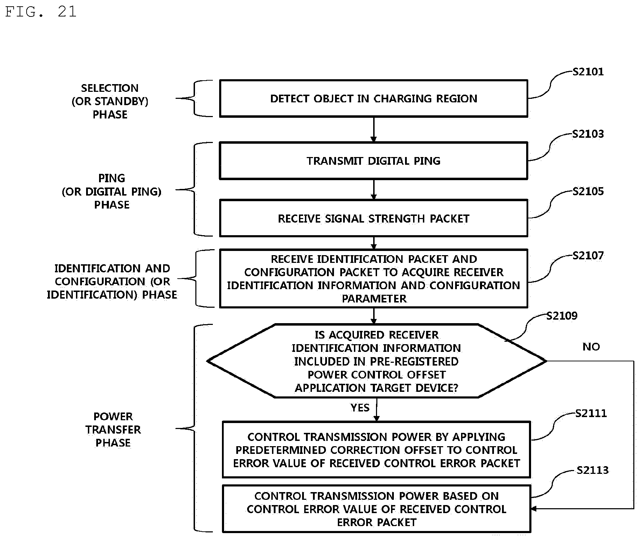

FIG. 21 is a flowchart for explaining a power control method in the wireless power transmission device according to an embodiment of the present invention.

Referring to FIG. 21, when detecting an object in a charging area in the Selection (or Standby) phase, the wireless power transmission device may transition to the Ping (or Digital Ping) phase so as to transmit a digital ping signal and receive a signal strength packet (S2101 to S2105).

When receiving the signal strength packet, the wireless power transmission device may transition to the Identification and Configuration (or Identification) phase. Then, by receiving an identification packet and a configuration packet in the Identification and Configuration (or Identification) phase, the wireless power transmission device may acquire identification information and various configuration parameters regarding the corresponding wireless power reception device (S2107). Here, a description of the identification information and the configuration parameters will be replaced with the above description of FIGs. 1 to 17.

When the configuration packet is received normally, the wireless power transmission device may transition to the Power Transfer phase to receive a control error packet and perform transmission power control based on a control error value included in the received control error packet (S2109).

The wireless power transmission device may check whether or not the acquired receiver identification information is included in a pre-registered power control offset application target device list (S2111).

When the checking result is that the receiver identification information is included in the power control offset application target device list, the wireless power transmission device may control transmission power by applying a predetermined correction offset to a control error value included in a received control error packet (S2111).

When the checking result in step S2111 is that no receiver identification information is included in the power control offset application target device list, the wireless power transmission device may control transmission power based on the control error value included in the received control error packet (S2113).

In step 2111, when power control is performed by applying the correction offset to the control error value, the wireless power transmission device may increase the transmission power at a high speed. Here, the correction offset may be a parameter value for controlling the time required for the wireless power transmission device to control power so as to correspond to the power level corresponding to the control error value.

In one example, the wireless power transmission device may perform incremental power control in order to increase the power level corresponding to the control error value. At this time, the incremental power control level may be controlled by the correction offset. For example, when the power that needs to be increased according to the control error value is 6W, and the default incremental power control level is 1W, the wireless power transmission device may transmit a desired level of power through a total of six power control cycles. On the other hand, under the same conditions, when the correction offset is 2W, the incremental power control level may be determined to be 3W, which is the sum of the default incremental power control level 1W and the correction offset 2W. Thus, once the correction offset 2W is applied, a desired level of power may be transmitted through a total of two power control cycles. Here, the power control cycle may be predefined, and the value thereof is not limited here. For convenience of explanation, the correction offset will be referred to as a first offset.

In another embodiment of the present invention, the wireless power transmission device may continuously monitor the control error packet received from the wireless power reception device to determine whether the control error value is stabilized. When it is determined that the control error value has stabilized, the wireless power transmission device may initialize the incremental power control level to the default incremental power control level. Here, the control error value may be determined to be stabilized when a change in the control error value within the unit time is maintained within a predetermined reference value. However, this is only one embodiment, and whether the control error value is stabilized may be determined based on statistical values such as the variance, standard deviation, and average of the control error values.

The wireless power transmission device according to another embodiment of the present invention may add a predetermined offset to the control error value included in the control error packet when the identified receiver corresponds to a pre-registered power control offset application target device. In this case, the wireless power transmission device may perform power control based on a control error value to which a predetermined offset value is added. Hereinafter, for convenience of explanation, the offset added to the control error value will be referred to as a second offset.

When the identified receiver corresponds to the pre-registered power control offset application target device, the wireless power transmission device may apply the second offset as well as the first offset so as to perform power control on the wireless power reception device.

The power control method in the wireless power transmission device according to another embodiment of the present invention may further include returning to step 1807 after applying at least one of the first offset or the second offset to the receiver registered as the device to which the power control offset is applied after step 1813 in FIG. 18.

The power control method in the wireless power transmission device according to another embodiment of the present invention may further include performing power control after applying at least one of the first offset or the second offset to the receiver registered as the device to which the power control offset is applied after any one of step 1913 of FIG. 19 and step 2013 of FIG. 20.

The method according to the above-described embodiment may be implemented as a program to be executed on a computer and stored in a computer-readable recording medium. Examples of the computer-readable recording medium include ROM, RAM, CD-ROM, magnetic tapes, floppy disks, and optical data storage devices, and also include carrier-wave type implementation (e.g., transmission over the Internet).

The computer-readable recording medium may be distributed to a computer system connected over a network, and computer-readable code may be stored and executed thereon in a distributed manner. Functional programs, code, and code segments for implementing the method described above may be easily inferred by programmers in the art to which the embodiments pertain.

It is apparent to those skilled in the art that the present invention may be embodied in specific forms other than those set forth herein without departing from the spirit and essential characteristics of the present invention.

Therefore, the above embodiments should be construed in all aspects as illustrative and not restrictive. The scope of the invention should be determined by the appended claims and their legal equivalents, and all changes coming within the meaning and equivalency range of the appended claims are intended to be embraced therein.

### [Industrial Applicability]

The present invention is applicable to a wireless power transmission device for wireless charging.

## Claims

1. A wireless power transmission device configured to wirelessly transmit power to a wireless power reception device, the wireless power transmission device comprising:
a power transmission unit configured to transmit a power signal via a transmission coil;
a power conversion unit configured to convert a strength of power applied from an outside and transfer the strength of power to the power transmission unit;
a communication unit configured to receive a packet from the wireless power reception device; and
a controller configured to control the power based on a control error value received via the communication unit,
wherein the controller controls the power by applying a predetermined offset to the control error value when receiving an unexpected packet in a power transfer phase.

2. The wireless power transmission device according to claim 1, wherein the unexpected packet in the power transfer phase comprises an expected signal strength packet in a ping phase.

3. The wireless power transmission device according to claim 1, wherein the control error value is included in a control error packet received in the power transfer phase, and the controller controls the power by applying the offset to the control error value when the control error packet is not received within a preset predetermined control error packet transmission period.

4. The wireless power transmission device according to claim 1, wherein the controller receives a received power packet for identifying information on a strength of power received by the wireless power reception device via the communication unit in the power transfer phase, and controls the power by applying the offset to the control error value when the received power packet is not received within a predefined received power packet transmission period.

5. The wireless power transmission device according to claim 4, wherein the controller determines whether or not to apply the offset by checking whether or not a next received power packet is received within the received power packet transmission period when a strength of received power calculated based on the received power packet last received by the controller is within a normal range.

6. The wireless power transmission device according to claim 4, wherein the controller registers, in a power control offset application target device list, information for identification of a receiver corresponding to a wireless power reception device, from which a next received power packet is not received within the received power packet transmission period, and controls the power by applying the offset to the wireless power reception device when a receiver identifier included in the power control offset application target device list is acquired in an identification phase.

7. The wireless power transmission device according to claim 6, wherein the receiver identifier comprises at least one of version information for identifying versions of software and hardware installed in the receiver, manufacturer information for identifying a manufacturer of the receiver, or device identification information for uniquely identifying the receiver.

8. The wireless power transmission device according to claim 1, wherein the offset application is released and the power is controlled based on the control error value when a fluctuation width of the control error value is stable within a predetermined reference value for a predetermined time.

9. The wireless power transmission device according to claim 1, wherein the offset comprises at least one of a first offset for controlling a time required to control the power to a power level corresponding to the control error value or a second offset added to the control error value, and
wherein the power is controlled based on the control error value added with the second offset.

10. The wireless power transmission device according to claim 1, wherein the controller receives a configuration packet via the communication unit, and determines a value of the offset based on at least one of a power class or a maximum power of the wireless power reception device included in the configuration packet.

11. A wireless charging method of a wireless power transmission device that wirelessly transmits power, the wireless charging method comprising:
a ping phase of transmitting a power signal of a predetermined pattern for wireless power reception device identification;
an identification phase of identifying a wireless power reception device based on a received identification packet; and
a power transfer phase of controlling power based on a control error value received from the identified wireless power reception device,
wherein the power is controlled by applying a predetermined offset to the control error value when an unexpected packet is received in the power transfer phase.

12. The wireless charging method according to claim 11, wherein the unexpected packet in the power transfer phase comprises an expected signal strength packet in the ping phase.

13. The wireless charging method according to claim 11, wherein the control error value is included in a control error packet received in the power transfer phase, and the power is controlled by applying the offset to the control error value when the control error packet is not received within a preset predetermined control error packet transmission period.

14. The wireless charging method according to claim 11, wherein, in the power transfer phase, a received power packet for identifying information on a strength of power received by the wireless power reception device is received, and the power is controlled by applying the offset to the control error value when the received power packet is not received within a predefined received power packet transmission period.

15. The wireless charging method according to claim 14, wherein whether or not to apply the offset is determined by checking whether or not a next received power packet is received within the received power packet transmission period when a strength of received power calculated based on the last received power packet is within a normal range.

16. The wireless charging method according to claim 14, further comprising registering, in a power control offset application target device list, information for identification of a receiver corresponding to a wireless power reception device, from which a next received power packet is not received within the received power packet transmission period,
wherein the power is controlled by applying the offset to the wireless power reception device when a receiver identifier included in the power control offset application target device list is acquired in the identification phase.

17. The wireless charging method according to claim 16, wherein the receiver identifier comprises at least one of version information for identifying versions of software and hardware installed in the receiver, manufacturer information for identifying a manufacturer of the receiver, or device identification information for uniquely identifying the receiver.

18. The wireless charging method according to claim 11, wherein the offset application is released and the power is controlled based on the control error value when a fluctuation width of the control error value is stable within a predetermined reference value for a predetermined time.

19. The wireless charging method according to claim 11, wherein the offset comprises at least one of a first offset for controlling a time required to control the power to a power level corresponding to the control error value or a second offset added to the control error value, and
wherein the power is controlled based on the control error value added with the second offset.

20. The wireless charging method according to claim 11, further comprising receiving a configuration packet for identifying a configuration of the identified wireless power reception device,
wherein a value of the offset is determined based on at least one of a power class or a maximum power of the wireless power reception device included in the configuration packet.
